# EUROPÄISCHE PATENTANMELDUNG

(11) **EP 2 111 941 A2**
(43) Veröffentlichungstag der Anmeldung: **28.10.2009**
(21) Anmeldenummer: 09005709.2
(22) Anmeldetag: 23.04.2009
(51) Int. Cl.: B23K 9/00, B23K 9/028, B23K 26/24, B23K 26/28

(54) **Kegfass und Verfahren zu dessen Herstellung**

(30) Priorität: 25.04.2008 DE 102008020724
(71) Anmelder: Niro-Plan AG, 4663 Aaburg (CH)
(72) Erfinder: Faltin, Eberhard, 57482 Wenden (DE); Halbe, Martin, 57482 Wenden-Altenhof (DE); Scholz, Markus, Dr., 57223 Kreuztal (DE)
(74) Vertreter: Lemcke, Brommer & Partner

(57) **Zusammenfassung**

Ein Verfahren zum stoffschlüssigen Verbinden eines metallischen Kragenrings (3) mit dem Fasskörper (2) eines Kegs (1), insbesondere aus Edelstahl, zeichnet sich dadurch aus, dass der Kragenring (3) ohne Verwendung eines Schweißzusatzwerkstoffs mit dem Fasskörper (2) verschweißt wird.

## Beschreibung

Die vorliegende Erfindung betrifft ein Verfahren nach dem Oberbegriff des Patentanspruchs 1 zum stoffschlüssigen Verbinden eines metallischen Kragenrings mit dem Fasskörper eines Kegs, insbesondere aus Edelstahl.

Weiterhin betrifft die vorliegende Erfindung ein Keg nach dem Oberbegriff des Patentanspruchs 12, insbesondere ein Getränkekeg aus Edelstahl, mit einem Fasskörper und wenigstens einem angeschweißten Kragenring.

Kegfässer, insbesondere Getränkekegs aus Edelstahl, kurz: Kegs, bestehen herkömmlicherweise aus einem Fasskörper, an dem oben und unten jeweils ein Kragenring angeschweißt ist, um das Keg handhabbar zu machen, ihm einen sicheren Stand zu verleihen und um seine Stapelbarkeit zu erreichen. Außerdem schützen die Kragenringe an dem Keg vorhandene Fittings und/oder Armaturen gegen Einflüsse von außen.

Nach dem Stand der Technik ist es üblich, die aufgesetzten oder anliegenden Kragenringe an Edelstahlkegs durch einen MAG-Schweißprozess (Metall-Aktivgas-Schweißprozess) zu fixieren. Dadurch ergeben sich prozessbedingt sowohl beim Anwender als auch beim Hersteller eine Reihe von Nachteilen. Diese umfassen beispielsweise die Kosten für den einzusetzenden SchweißZusatzwerkstoff. Darüber hinaus entstehen an der Kragenring-Schweißnaht regelmäßig Hohlräume aufgrund ungenügender Durchschweißung, und es kommt zu Metallspritzern auf der Kegoberfläche, welche mit einem generell unsauber wirkenden optischen Eindruck bei der Schweißnahtbeurteilung einhergehen.

Bei der Fertigung besteht weiterhin aufgrund der relativ schnell verschmutzenden Gasdüsen die Gefahr einer Porenbildung. Die genannte Porenbildung kann insbesondere gemeinsam mit den weiter oben erwähnten Hohlräumen beim Gebrauch des Kegs zu einem Entstehen von Angriffspunkten für Korrosion werden. Vor allem die genannten Hohlräume hinter der Schweißnaht füllen sich durch Kapillarwirkung mit Beizmedien, Schmutz und Feuchtigkeit und stellen somit Ausgangspunkte für Korrosion dar.

Insbesondere unter Gesichtspunkten des "Hygienic design" sind MAG-Schweißnähte als ungünstig anzusehen. Die Oberflächenrauhigkeit der Naht sowie die festhaftenden Metallspritzer erfüllen nicht die Oberflächenanforderungen für eine leichte Reinigung. Sie bieten ebenso wie die erwähnten Hohlräume potentielle Lebens- und Überlebensräume für Mikroorganismen.

Der Erfindung liegt die Aufgabe zugrunde, ein Verfahren zum Herstellen von Kegs, insbesondere zum stoffschlüssigen Verbinden eines metallischen Kragenrings mit dem Fasskörper eines Kegs, sowie ein entsprechend hergestelltes Keg anzugeben, welche sich in der Anwendung durch geringere Kosten, eine verbesserte Schweißnahtqualität und verminderte Korrosionsanfälligkeit auszeichnen.

Die Aufgabe wird erfindungsgemäß gelöst durch ein Verfahren mit den Merkmalen des Patentanspruchs 1.

Weiterhin wird die Aufgabe gelöst durch ein Keg mit den Merkmalen des Patentanspruchs 15.

Vorteilhafte Weiterbildungen der Erfindung sind Gegenstand von Unteransprüchen, deren Wortlaut hiermit durch ausdrückliche Bezugnahme in die Beschreibung aufgenommen wird, um unnötige Textwiederholungen zu vermeiden.

Erfindungsgemäß ist ein Verfahren zum stoffschlüssigen Verbinden eines metallischen Kragenrings mit dem Fasskörper eines Kegs, insbesondere aus Edelstahl, **dadurch gekennzeichnet, dass** der Kragenring ohne Verwendung eines Schweißzusatzwerkstoffs mit dem Fasskörper verschweißt wird.

Ein erfindungsgemäßes Keg, insbesondere Getränkekeg aus Edelstahl, mit einem Fasskörper und wenigstens einem angeschweißten Kragenring ist **dadurch gekennzeichnet, dass** das Keg nach dem erfindungsgemäßen Verfahren herstellbar ist.

Durch den erfindungsgemäßen Einsatz eines Schweißverfahrens ohne Verwendung von Schweißzusatzwerkstoff lassen sich die weiter oben aufgeführten Nachteile des Standes der Technik vermeiden. Insbesondere entfallen die Kosten für den Zusatzwerkstoff, und die Schweißnaht ist generell sauberer. Weiterhin ist die Gefahr der Porenbildung reduziert, so dass ein erfindungsgemäß hergestelltes Keg weniger anfällig für Korrosion ist, und es kommt nicht zu Metallspritzern auf der Kegoberfläche.

Eine erste Weiterbildung des erfindungsgemäßen Verfahrens sieht vor, dass für den Kragenring ein Material mit einer Wandstärke von 1,5 mm bis 2,4 mm, vorzugsweise mit einer Wandstärke von 2,0 mm, verwendet wird. Für den Fasskörper kann in diesem Zusammenhang die Verwendung eines Materials mit einer Wandstärke von 1,0 mm bis 1,7 mm, vorzugsweise mit einer Wandstärke von 1,3 mm, vorgesehen sein. Dabei umfasst eine andere Weiterbildung des erfindungsgemäßen Verfahrens insbesondere solche Ausgestaltungen, bei denen der Kragenring und der Fasskörper unterschiedliche Wandstärken aufweisen, wobei die Wandstärke des Kragenrings größer ist als die Wandstärke des Fasskörpers.

Im Zuge einer entsprechenden Ausgestaltung der vorliegenden Erfindung werden also vorzugsweise Materialien unterschiedlicher Wandstärke miteinander verbunden, beispielsweise ein Kragenringmaterial mit 2 mm Wandstärke mit einem Fasskörper (Kegblase) von 1,3 mm Wandstärke. Um bei der Verwendung derartig feiner Bleche insbesondere ein Durchbrennen der relativ dünnen Kegblase zu verhindern, wurde das erfindungsgemäße Verfahren im Zuge weiterer Ausgestaltungen dahingehend optimiert, dass es bei der stoffflüssigen Verbindung zu einem Erschmelzen des Schweißwerkstoffs im Wesentlichen nur aus dem Bauteil mit der größeren Materialstärke, d. h. dem Kragenring kommt. Es handelt sich also um ein gezielt asymmetrisches Aufschmelzen entgegen der physikalischen Neigung des dünneren Materials, d. h. der Kegblase, zuerst aufzuschmelzen. Im Zuge einer entsprechenden Weiterbildung des erfindungsgemäßen Verfahrens ist daher vorgesehen, dass der Schweißwinkel, unter dem eine Schweißvorrichtung relativ zu dem Fasskörper und dem Kragenring geführt wird, und/oder die an der Schweißstelle eingebrachte Wärme- oder Schweißenergie so gewählt wird bzw. gewählt werden, dass asymmetrisch im Wesentlichen nur Material des Kragenrings aufgeschmolzen wird.

Eine andere vorteilhafte Weiterbildung des erfindungsgemäßen Verfahrens sieht vor, dass der Kragenring in einem Anlagepunkt bzw. entlang einer Anlagelinie unter einem bestimmten Anstellwinkel α auf den Fasskörper aufgestellt wird, und zwar im Bereich einer Schulter, das heißt einem nach außen gekrümmten Bereich des Fasskörpers. Der genannte Anstellwinkel α wird dabei zwischen einer Tangente an den Fasskörper durch den Anlagepunkt einerseits und andererseits dem Verlauf einer Anlagekantenfläche des Kragenrings bestimmt. Bei der genannten Anlagekantenfläche handelt es sich um diejenige Fläche (Schnittkante) des Kragenrings, mit welcher dieser auf den Fasskörper aufgestellt wird.

Im Zuge einer anderen Weiterbildung des erfindungsgemäßen Verfahrens beträgt der Anstellwinkel α zwischen 3° und 120°, vorzugsweise jedoch zwischen 30° und 90°; der konkrete Wert hängt von den verwendeten Materialstärken und dem eingesetzten Schweißprozess ab.

Eine andere Weiterbildung des erfindungsgemäßen Verfahrens sieht vor, dass eine Schweißvorrichtung, welche zur eigentlichen Durchführung des Schweißprozesses eingesetzt wird (z. B. ein Schweißbrenner), unter einem Schweißwinkel β bezogen auf die genannte Tangente angeordnet wird, und zwar auf der dem Anlagepunkt abgewandten Seite des Kragenrings.

Der Schweißwinkel β kann den ein- bis dreifachen und vorzugsweise etwa den doppelten Wert des Anstellwinkels α betragen, das heißt α ≤ β ≤ 3 · α, vorzugsweise β = 2 · α. Eine andere Weiterbildung des erfindungsgemäßen Verfahrens sieht jedoch vor, dass der Schweißwinkel β dabei maximal 90° beträgt.

Durch die vorstehend beschriebene Geometrie der relativen Anordnung von Kragenring und Fasskörper entsteht zwischen diesen ein im Querschnitt keilförmiger Schweißspalt, welcher sich aufgrund der beschriebenen winkelmäßigen Anordnung mit dem abschmelzenden Material des Kragenrings füllt und somit ohne Verwendung eines Schweißzusatzwerkstoffs für eine saubere und dauerhafte stoffschlüssige Verbindung von Kragenring und Fasskörper sorgt. Auf diese Weise wird der Materialverbrauch beim Verbinden von Kragenring und Fasskörper reduziert; das Ausbilden einer Kehle, wozu der Kragenring in kostenungünstiger Weise über die Anlagelinie hinaus zu verlängern wäre, ist nicht erforderlich.

Alternative Weiterbildungen des erfindungsgemäßen Verfahrens sehen vor, dass die Schweißvorrichtung bezogen auf die Fasskörperachse innerhalb oder außerhalb des Kragenrings angeordnet wird.

Wie bereits angesprochen, sieht eine andere Weiterbildung des erfindungsgemäßen Verfahrens vor, dass durch Abschmelzen von Kragenringmaterial ein beim Anstellen des Kragenrings gebildeter Schweißspalt im Wesentlichen vollständig mit den abgeschmolzenen bzw. abschmelzenden Kragenringmaterial gefüllt wird, um die gewünschte stoffschlüssige Verbindung von Kragenring und Fasskörper zu erhalten. Die genannte stoffschlüssige Verbindung ergibt sich demnach allein durch eine geeignete Formgebung von Kragenring und/oder Fasskörper und entsprechende Stellung bzw. Führung der Schweißvorrichtung (Schweißbrenner). Eine weniger als vollständige Füllung des Spalts im Zuge einer unvollständigen Durchschweißung wirkt sich dabei aus den eingangs genannten Gründen zwar grundsätzlich negativ auf die Qualität der Verbindung aus, ohne jedoch an sich schon aus Gründen rein mechanischer Stabilität aus dem Bereich der vorliegenden Erfindung auszuscheiden.

Der erfindungsgemäße Einsatz des Schweißverfahrens sichert in Bezug auf die neuesten Forderungen des "Hygienic design" einerseits durch die Spritzerfreiheit und andererseits durch die vorstehend beschriebene Möglichkeit der spaltfreien stoffschlüssigen Verbindung durch Abschmelzung die Oberflächenanforderungen für eine leichte Reinigung.

Um die Präzision des Schweißvorgangs und dessen Geschwindigkeit in weiten Bereichen anwendungsspezifisch variieren zu können, sieht eine andere Weiterbildung des erfindungsgemäßen Verfahrens vor, dass als Schweißprozess wahlweise ein Wolframschutzgasschweißen oder ein Plasma- bzw. Licht/Laserstahlschweißen eingesetzt wird, wobei diese Verfahren jeweils sowohl gepulst als auch ungepulst eingesetzt werden können.

Der vorliegend vorgeschlagenen stoffschlüssigen Verbindung eines metallischen Kragenrings mit dem Fasskörper eines Kegs standen bisher ein schwer beherrschbares Spaltmaß, welches bedingt durch die Materialstärken wesentlich die Schweißspaltfüllung beeinflusst, sowie die gezielte Steuerung des Schmelzbades durch den Lichtbogendruck und die Schwerkraft entgegen. Physikalisch bedingt kommt es ohne die erfindungsgemäße Anwendung der genannten Technologien zum Durchbrennen des Bauteils mit der geringeren Wandstärke, d. h. des Fasskörpers bzw. zu massiven Bindefehlern, welche neben der Stabilität auch die Korrosionsbeständigkeit (Spaltkorrosion) nachteilig herabsetzen. Die Anwendung der hier vorgeschlagenen Schweißverfahren ohne Schweißzusatzwerkstoff an den aufgesetzten Kragenringen von Kegs war daher bislang ohne die vorliegende erfinderische Weiterentwicklung nicht möglich. Nach dem Stand der Technik konnte eine solche Verbindung nur mittels des MAG-Schweißprozesses prozesssicher unter Inkaufnahme der weiter oben genannten Nachteile ausgeführt werden.

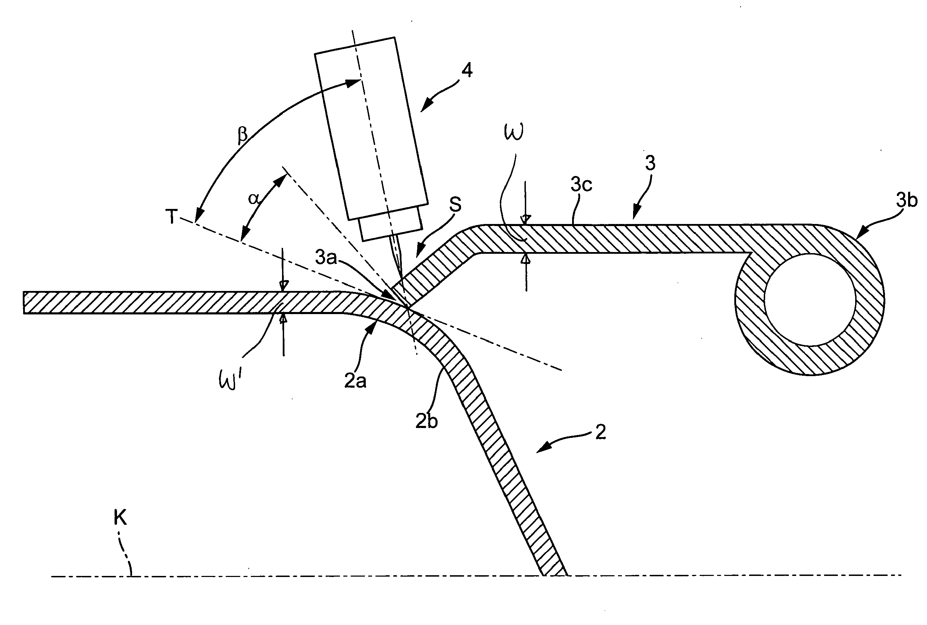

Weitere Eigenschaften und Vorteile der vorliegenden Erfindung ergeben sich aus der nachfolgenden Beschreibung von Ausführungsbeispielen anhand der Zeichnung. Die Figur zeigt
eine teilweise Querschnittsansicht des Fasskörpers eines Getränkekegs mit aufgesetztem Kragenring während des Anschweißens des Kragenrings an den Fasskörper nach dem erfindungsgemäßen Verfahren.

Das in der beigefügten Figur nur teilweise dargestellte Getränkekeg 1 besteht im Wesentlichen aus einem ebenfalls nur teilweise dargestellten Fasskörper 2, der aus zwei tiefgezogenen Halbschalen hergestellt sein kann, die an einer nicht gezeigten Schweißnaht miteinander verschweißt sind.

Die gestrichelte horizontale Linie in der beigefügten Figur bezeichnet die Kegachse K.

Bei einem fertigen Keg 1 sind an dem Fasskörper 2 üblicherweise oben und unten Kragenringe 3 vorgesehen, von denen in der gewählten Darstellung nur einer teilweise erkennbar ist. Der bzw. die Kragenringe 3 sorgen für einen sicheren Stand des Kegs 1 und können dieses optional stapelbar machen. Außerdem schützen die Kragenringe 3 ein zeichnerisch nicht dargestelltes Fitting sowie gegebenenfalls eine CO₂-Armatur gegen Einflüsse von außen. Des Weiteren erleichtern die Kragenringe 3 die Handhabung des Kegs 1.

Der Fasskörper 2 (nachfolgend auch als "Kegblase" bezeichnet) weist bei Bezugszeichen 2a einen gekrümmten Abschnitt ("Schulter") auf. In diesem Bereich 2a wird der Kragenring 3 mit seiner Schnittkante 3a mittels eines Schweißprozesses an der Kegblase 2 befestigt, worauf nachfolgend noch genauer eingegangen wird.

Der Kragenring 3 weist an seinem bezogen auf das Keg 2 freien Ende eine im Querschnitt kreisringförmige Struktur 3b auf, an die sich ein im Wesentlichen parallel zur Kegachse K erstreckender Abschnitt 3c anschließt. Dieser ist in der Nähe des Fasskörpers 2 zur Kegachse K hin abgewinkelt und definiert an seinem Ende die bereits erwähnte Schnittkante 3a.

Das Keg 1, das heißt insbesondere die Kegblase 2 aber auch der Kragenring 3 können zumindest teilweise aus Edelstahl bestehen. Die Wandstärken W bzw. W' betragen zwischen 1,5 mm und 2,4 mm für den Kragenring 3 und 1,0 mm bis 1,7 mm für die Kegblase 2. Dabei ist das Material des Kragenrings 3 regelmäßig dicker als das Material der Kegblase 2, wie in der Figur angedeutet, d. h. W > W'. Eine bevorzugte Wandstärkenkombination liegt bei W=2,0 mm für den Kragenring 3 und W'=1,3 mm für die Kegblase 2.

Um die in der Beschreibungseinleitung genannten Nachteile beim herkömmlichen Anschweißen des Kragenrings bzw. der Kragenringe 3 an den Fasskörper 2 zu vermeiden, kommt vorliegend ein Schweißprozess zum Einsatz, bei dem der Kragenring 3 ohne Verwendung eines Schweißzusatzwerkstoffs mit dem Fasskörper 2 verschweißt wird. Mögliche Schweißprozesse sind in diesem Zusammenhang ein WIG (Wolfram-Inertgas)-Schweißprozess oder alternativ ein Plasma- oder Laserstrahlschweißprozess. Dieser wird mittels eines geeigneten Schweißwerkzeugs durchgeführt, welches in der beigefügten Figur symbolisch als Schweißbrenner 4 dargestellt ist, der bei Bezugszeichen S auf die zu verschweißenden Bestandteile 2, 3 des Kegs 1 einwirkt, wie nachfolgend detailliert beschrieben.

Zu diesem Zweck wird der Kragenring 3 mit seiner geeignet angestellten Schnittkante oder Kantenfläche 3a im äußeren Bereich der Schulter 2a auf der Kegblase 2 platziert und anschließend mittels des durch die Schweißvorrichtung 4 erzeugten Lichtbogens oder Laserstrahls derart asymmetrisch abgeschmolzen, dass das abschmelzende bzw. abgeschmolzene Material des Kragenringes 3 den zwischen der Kegschulter 2a und der Schnittkante 3a zunächst existierenden Schweißspalt nach Möglichkeit vollständig füllt. Dabei wird der Materialquerschnitt der Kegblase 2 nicht geschwächt. Die Innenseite 2b der Kegblase 2 bleibt walzblank.

Bei Verwendung der exemplarisch genannten WIG- bzw. Plasma- oder Laserschweißprozesse ist je nach angestrebtem Fertigungsablauf der Einsatz eines gepulsten oder eines ungepulsten Schweißverfahrens möglich, um die Schweißpräzision, die Einbrandverhältnisse und/oder die Schweißgeschwindigkeit gezielt zu beeinflussen.

Von entscheidender Bedeutung ist in diesem Zusammenhang auch die Wahl der einzubringenden Wärmemenge bzw. Schweißenergie, welche mit einer Potenz zwischen 2 und 3 in Abhängigkeit von der Wandstärke des aufzuschmelzenden Materials anwächst. Bei einem Wandstärkenverhältnis Kegblase/Kragenring von W'/W=1:1,5 unterscheiden sich die zum Aufschmelzen des jeweiligen Materials erforderlichen Wärmemengen bereits um das Zwei- bis Vierfache. Daher ist es vorliegend von entscheidender Bedeutung, dass die nachfolgend detailliert beschriebenen geometrischen Aspekte möglichst genau berücksichtigt werden, um trotz der zum Aufschmelzen des Kragenringmaterials erforderlichen relativ großen Wärmemenge ein Durchbrennen der Kegblase 2 sicher zu vermeiden.

Ein wichtiger Aspekt des erfindungsgemäßen Verschweißens von Kragenring 3 und Fasskörper 2 ohne Verwendung eines Schweißzusatzwerkstoffs nach einem der vorstehend genannten Verfahren ist demnach - wie bereits erwähnt - die Geometrie der Anordnung von Fasskörper 2 und Kragenring 3 vor bzw. während des eigentlichen Schweißvorgangs, worauf nachstehend genauer eingegangen wird:

Wie in der Figur gezeigt, wird der Kragenring 3 vorzugsweise mit der von der Schweißvorrichtung 4 abgewandten Seite der Schnittkante 3a unter einem Winkel α auf die Kegblase 2 aufgestellt. Hierbei spielt es grundsätzlich keine Rolle, ob die Schweißeinrichtung bezogen auf die Kegachse K außerhalb (wie dargestellt) oder innerhalb des Kragenrings 2 platziert wird. Der genannte Anstellwinkel α beträgt zwischen 3° und 120°, vorzugsweise zwischen 30° und 90°, bezogen auf eine Tangente T an die Außenseite der Schulter 2a der Kegblase 2 durch den (gedachten) entsprechenden Aufstandpunkt des Kragenrings 3. Der speziell zu wählende Wert für den Winkel α hängt von den gewählten Materialstärken der Kegblase 2 bzw. des Kragenrings 3 und von dem verwendeten Schweißverfahren ab. Die Kegachse K verläuft vorzugsweise senkrecht zur Richtung der Erdbeschleunigung.

Dabei ist zu beachten, dass zum Erreichen allein der geforderten mechanischen Stabilität das Erstellen eines Vollanschlusses nicht unbedingt erforderlich ist. Allerdings ist ein solcher aus verfahrenstechnischen Gründen unverzichtbar, um insbesondere die Spaltkorrosion durch Ein-/Anlagerungen von Verschmutzungen und Feuchtigkeit im Betrieb des Kegs 1 zu vermeiden, wie bereits erwähnt.

Der von der Schweißvorrichtung 4 erzeugte Lichtbogen bzw. das entsprechend erzeugte Plasma wird entlang der angestellten Kante des Kragenrings 3 um die Kegachse K (in der gezeigten Anordnung speziell senkrecht zur Blattebene) geführt. Durch die besondere Geometrie der Anordnung lässt sich aufgrund der Feldkonzentration an der Kragenringkante die Eigenregelung des Schweißvorgangs ausnutzen, so dass eine primäre Konzentration der Schweißwärme auf das abzuschmelzende Kragenringmaterial erreicht wird. Nur in zweiter Linie erfolgt zugleich ein Aufschmelzen des Materials der Kegblase 2, um auch hier einen ausreichenden Einbrand zu erzielen. Letzterer Effekt wird durch das Anstellen der Schweißvorrichtung 4 bezogen auf die Kragenringkante und den daraus resultierenden (Lichtbogen-)Druck auf die Schweißnaht erreicht. Grundsätzlich ergibt sich der Anstellwinkel β der Schweißvorrichtung 4 aus einer Verdopplung des Anstellwinkels α für den Kragenring 3. Diese Bedingung (β = 2 · α) gilt insbesondere für Werte α ≤ 45°. Für Werte α ≥ 45° stabilisiert sich der Schweißwinkel β bei etwa 90°. Jedoch sind für den Winkel β auch Werte α ≤ β ≤ 3 · α möglich.

Auf diese Weise erreicht die vorliegende Erfindung durch den Einsatz eines der Schweißprozesse aus einer Gruppe, die Wolfram-Schutzgasschweißen, Plasmaschweißen, Lichtstrahlschweißen (jeweils in gepulster oder ungepulster Form) und gegebenenfalls weitere Schweißverfahren ohne Zusatzwerkstoff enthält, eine verbesserte stoffschlüssige Anbindung von Kragenringen an den Fasskörper eines Kegs, insbesondere aus Edelstahl.

## Patentansprüche

1. Verfahren zum stoffschlüssigen Verbinden eines metallischen Kragenrings (3) mit dem Fasskörper (2) eines Kegs (1), insbesondere aus Edelstahl,
**dadurch gekennzeichnet,**
**dass** der Kragenring (3) ohne Verwendung eines Schweißzusatzwerkstoffs mit dem Fasskörper (2) verschweißt wird.

2. Verfahren nach Anspruch 1,
**dadurch gekennzeichnet,**
**dass** für den Kragenring (3) ein Material mit einer Wandstärke W von 1,5 mm - 2,4 mm, vorzugsweise 2,0 mm, und für den Fasskörper (2) ein Material mit einer Wandstärke W von 1,0 mm - 1,7 mm, vorzugsweise 1,3 mm, verwendet wird.

3. Verfahren nach Anspruch 1 oder 2,
**dadurch gekennzeichnet,**
**dass** der Kragenring (3) und der Fasskörper (2) unterschiedliche Wandstärken aufweisen, wobei die Wandstärke (W) des Kragenrings (3) größer ist als die Wandstärke (W') des Fasskörpers (2).

4. Verfahren nach einem der Ansprüche 1 bis 3,
**dadurch gekennzeichnet,**
**dass** der Kragenring (3) vor bzw. bei dem Verschweißen in einem Anlagepunkt bzw. entlang einer Anlagelinie unter einem Anstellwinkel α im Bereich einer Schulter (2a) des Fasskörpers (2) mit einer Anlagekantenfläche (3a) auf den Fasskörper (2) aufgestellt wird, wobei der Anstellwinkel α zwischen einer Tangente (T) an den Fasskörper (2) durch den Anlagepunkt und einem Verlauf der Anlagenkantenfläche (3a) des Kragenrings (3) bestimmt wird.

5. Verfahren nach Anspruch 4,
**dadurch gekennzeichnet,**
**dass** eine Schweißvorrichtung (4) unter einem Schweißwinkel β bezogen auf die Tangente (T) auf der dem Anlagepunkt abgewandten Seite des Kragenrings (3) angeordnet und geführt wird.

6. Verfahren nach Anspruch 4 oder 5,
**dadurch gekennzeichnet,**
**dass** der Anstellwinkel α zwischen 10° und 120°, vorzugsweise zwischen 30° und 90° beträgt.

7. Verfahren zumindest nach Anspruch 5,
**dadurch gekennzeichnet,**
**dass** der Schweißwinkel β etwa β = 2 · α beträgt.

8. Verfahren nach zumindest Anspruch 5 oder 7,
**dadurch gekennzeichnet,**
**dass** der Schweißwinkel β maximal 90° beträgt.

9. Verfahren nach zumindest Anspruch 5, 7 oder 8,
**dadurch gekennzeichnet,**
**dass** der Schweißwinkel β und die an der Schweißstelle eingebrachte Schweißenergie so gewählt wird, dass asymmetrisch im Wesentlichen nur Material des Kragenrings (3) aufgeschmolzen wird.

10. Verfahren nach mindestens einem der Ansprüche 1 bis 9,
**dadurch gekennzeichnet,**
**dass** eine zur Durchführung des Verfahrens eingesetzte Schweißvorrichtung (4) bezogen auf die Kegachse (K) innerhalb des Kragenrings (3) angeordnet wird.

11. Verfahren nach mindestens einem der Ansprüche 1 bis 9,
**dadurch gekennzeichnet,**
**dass** eine zur Durchführung des Verfahrens eingesetzte Schweißvorrichtung (4) bezogen auf die Kegachse (K) außerhalb des Kragenrings (3) angeordnet wird.

12. Verfahren nach mindestens einem der Ansprüche 1 bis 11,
**dadurch gekennzeichnet,**
**dass** durch gezieltes Abschmelzen von Kragenringmaterial ein beim Anstellen des Kragenrings (3) zwischen Kragenring (3) und Fasskörper (2) gebildeter Spalt zumindest teilweise und vorzugsweise im Wesentlichen vollständig mit dem Kragenringmaterial gefüllt wird.

13. Verfahren nach mindestens einem der Ansprüche 1 bis 12,
**dadurch gekennzeichnet,**
**dass** als Schweißprozess ein gepulster oder ungepulster Wolframschutzgasschweißprozess eingesetzt wird.

14. Verfahren nach mindestens einem der Ansprüche 1 bis 12,
**dadurch gekennzeichnet,**
**dass** als Schweißprozess ein Plasmaschweißen oder Licht- bzw. Laserstrahlschweißen, jeweils gepulst oder ungepulst, eingesetzt wird.

15. Keg (1), insbesondere Getränkekeg aus Edelstahl, mit einem Fasskörper (2) mit wenigstens einem angeschweißten Kragenring (3),
**dadurch gekennzeichnet,**
**dass** das Keg (1) nach dem Verfahren gemäß mindestens einem der vorhergehenden Ansprüche hergestellt ist.
